# EUROPÄISCHE PATENTSCHRIFT

(11) **EP 0 743 314 B1**
(45) Veröffentlichungstag und Bekanntmachung des Hinweises auf die Patenterteilung: **20.03.2002**
(21) Anmeldenummer: 96106955.6
(22) Anmeldetag: 03.05.1996
(51) Int. Cl.: C07F 7/08, C08G 77/50

(54) **Carbosilan-Dendrimere, ein Verfahren zur Herstellung und deren Verwendung**
Carbosilane dendrimers, their preparation and their use
Dendrimères carbosilanes, leur préparation et leur application

(30) Priorität: 16.05.1995 DE 19517838
(43) Veröffentlichungstag der Anmeldung: 20.11.1996
(73) Patentinhaber: BAYER AG, 51368 Leverkusen (DE)
(72) Erfinder: Mager, Michael, Dr., 51375 Leverkusen (DE); Eiling, Aloys, Dr., 44866 Bochum (DE); Schloh, Martin, Dr., 51061 Köln (DE)

(56) Entgegenhaltungen:
- WO-A-94/02536
- WO-A-94/06807
- US-A- 5 276 110
- POLYMER SCIENCE, Bd. 35, Nr. 11, 1.November 1993, Seiten 1575-1580, XP000420830 MUZAFAROV A M ET AL: "ORGANOSILICON DENDRIMERS: VOLUME-GROWING POLYALLYLCARBOSILANES"
- MACROMOLECULES, Bd. 28, Nr. 19, 11.September 1995, Seiten 6657-6661, XP000527663 LORENZ K ET AL: "CARBOSILANE-BASED DENDRITIC POLYOLS"

## Beschreibung

Die vorliegende Erfindung betrifft neue Carbosilan-Dendrimere, ein Verfahren zur Herstellung sowie deren Verwendung.

Als Dendrimere bezeichnet man stark verzweigte Moleküle mit hochgeordneter meist dreidimensionaler Struktur, deren Molmasse im Bereich derer von Oligo- oder Polymeren liegt.

Die bisher bekannten Carbosilan-Dendrimere werden ausgehend von einem Initiatorkern durch alternierende Hydrosilylierung und Grignard-Reaktion aufgebaut (siehe z.B. U.S. 5,276,110, Adv. Mater. 1993, 5, 466-468, Macromolecules 1993, 26, 963-968, J. Chem. Soc., Chem. Commun. 1994, 2575-2576 und Organometallics 1994, 13, 2682-2690). Zum Beispiel wird das Initiatormolekül Tetravinylsilan in THF unter Pt-Katalyse mit HSiCl₂CH₃ zur Reaktion gebracht. Durch Umsetzung mit Vinylmagnesiumhalogenid wird wiederum ein Vinylsilan aufgebaut, welches erneut für eine Hydrosilylierung zur Verfügung steht.

Dendrimere können mit exakt einheitlicher Molmasse gezielt aufgebaut werden, während die üblichen Polymere stets eine bestimmte Molmassenverteilung zeigen.

Diese Eigenschaft prädestiniert sie für einen Einsatz als Referenzsubstanz bei verschiedenen analytischen Methoden, wie z.B. Elektronenmikroskopie und Gelpermeationschromatographie. Durch die Einarbeitung kleiner Teilchen in polymere Materialien erreicht man oft eine Verbesserung des Eigenschaftsprofils, im einzelnen etwa der Zugfestigkeit, Weiter- oder Einreißfestigkeit. Die Beimischung von pyrogener Kieselsäure in HTV- oder RTV-Siliconkautschuke oder synthetischem Kautschuk sei hier beispielsweise genannt. Da der gewünschte Verstärkungseffekt in Polymeren am größten ist je geringer die Teilchengrößenverteilung ist und die Transparenz bei Teilchengrößen deutlich unterhalb der des sichtbaren Lichtes erhalten bleibt, sind Carbosilan-Dendrimere zudem als Füllstoffe für Polymere geeignet.

Es erweist sich jedoch oft als schwierig höhermolekulare Carbosilan-Dendrimere mit unreaktiven Endgruppen mit einheitlicher Molmasse herzustellen (J. Am. Chem. Soc. 1991, 113, 4043-4044 und Polym. Prepr. 1993, 34, 77-78).

In J. Polym. Sci., Part A, Polymer Chemistry (1993), 31, S. 891 f. wird die Synthese von Carbosilan-Dendrimeren mit den unreaktiven Endgruppen -Si(OSiMe₃)₂Me beschrieben. Die Trennung des nach der Synthese erhaltenen Reaktionsgemisches gelang jedoch nur mit gaschromatographischen Methoden.

Aufgabe der vorliegenden Erfindung ist daher die Bereitstellung von hochmolekularen unreaktiven Carbosilan-Dendrimeren, die über eine exakt einheitliche Teilchengröße verfügen, die rein herstellbar sind und die sich sowohl für die Einarbeitung in transparente Kunststoffe als auch für den Einsatz als Eichsubstanz in der Analytik eignen.

Überraschenderweise wurde nun gefunden, daß Carbosilan-Dendrimere mit endständigen OSiR¹R²R³-Resten, mit R¹, R², R³ = Alkyl und/oder Aryl diese Anforderungen erfüllen.

Gegenstand der vorliegenden Erfindung sind daher Carbosilan-Dendrimere der Formel (I)

R₄₋ᵢSi[(CH₂)ₙSiXₐR₃₋ₐ]ᵢ (I)

mit i = 3,4, bevorzugt i = 4 und n = 2-6, bevorzugt n = 2, wobei n innerhalb des Moleküls gleich oder ungleich sein kann und wobei die weiteren Reste die folgende Bedeutung haben
a)

   X = OSiR¹R²R³

   mit R, R¹, R², R³ = Alkyl und/oder Aryl und
   a = 1 bis 3, bevorzugt a = 3
   ausgenommen die Kombination von n = 2, R = CH₃ mit a = 2,
   oder
b)

   X = [(CH₂)ₙSiY_{b}R_{3-b}]

   Y = OSiR¹R²R³

   mit R, R¹, R², R³ = Alkyl und/oder Aryl,
   a, b unabhängig voneinander = 1 bis 3, bevorzugt a = 3 und b = 3
   oder
c)

   X = [(CH₂)ₙSiR₃₋ₐ[(CH₂)ₙSiY_{b}R_{3-b}]ₐ]

   Y = OSiR¹R²R³

   mit R, R¹, R², R³ = Alkyl und/oder Aryl,
   a, b unabhängig voneinander 1 bis 3, bevorzugt a = 3 und b = 3
   oder
d)

   X = [(CH₂)ₙSiR₃₋ₐ[(CH₂)ₙSiR₃₋ₐ[(CH₂)ₙSiY_{b}R_{3-b}]ₐ]ₐ]

   Y = OSiR¹R²R³

   mit R, R¹, R², R³ = Alkyl und/oder Aryl,
   a, b unabhängig voneinander 1 bis 3, bevorzugt a = 3 und b = 3

Die Alkylreste R, R¹, R² oder R³ im Sinne der Erfindung sind vorzugsweise lineare oder verzweigte, gegebenenfalls substituierte C₁-C₅-Alkylreste. Die Arylreste R, R¹, R² oder R³ im Sinne der Erfindung sind vorzugsweise gegebenenfalls substituierte C₆-Ringe.

Der Begriff substituiert im Sinne der Erfindung umfaßt alle gängigen Substituenten, wie z.B. Halogen, Alkyl, Amin usw.

Ausformuliert entsprechen die erfindungsgemäßen Carbosilan-Dendrimere den Formeln (Ia-d)

R₄₋ᵢSi[(CH₂)ₙSi(OSiR¹R²R³)ₐR₃₋ₐ]ᵢ (Ia)

oder

R₄₋ᵢSi[(CH₂)ₙSiR₃₋ₐ[(CH₂)ₙSi(OSiR¹R²R³)_{b}R_{3-b}]ₐ]ᵢ (Ib)

oder

R₄₋ᵢSi[(CH₂)ₙSiR₃₋ₐ[(CH₂)ₙSiR₃₋ₐ[(CH₂)ₙSi(OSiR¹R²R³)_{b}R_{3-b}]ₐ]ₐ]ᵢ (Ic)

oder

R₄₋ᵢSi[(CH₂)ₙSiR₃₋ₐ[(CH₂)ₙSiR₃₋ₐ[(CH₂)ₙSiR₃₋ₐ[(CH₂)ₙSi(OSiR¹R²R³)_{b}R_{3-b}]ₐ]ₐ]ₐ]ᵢ, (Id)

In einer bevorzugten Ausführungsform der vorliegenden Erfindung sind die Werte der Indizes n innerhalb des Moleküls gleich.

Besonders bevorzugt sind Carbosilan-Dendrimere der Formeln

Si[(CH₂)₂Si(OSiR¹R²R³)₃]₄

oder

Si[(CH₂)₂Si[(CH₂)₂Si(OSiR¹R²R³)₃]₃]₄.

Gegenstand der vorliegenden Erfindung ist weiterhin ein Verfahren zur Herstellung von Carbosilan-Dendrimeren der Formel I

R₄₋ᵢSi[(CH₂)ₙSiXₐR₃₋ₐ]ᵢ (I)

mit i = 3,4 und n = 2-6, wobei n innerhalb des Moleküls gleich oder ungleich sein kann und wobei die weiteren Reste die folgende Bedeutung haben
a)

   X = OSiR¹R²R³

   mit R, R¹, R², R³ = Alkyl und/oder Aryl und
   a = 1 bis 3
   oder
b)

   X = [(CH₂)ₙSiY_{b}R_{3-b}]

   Y = OSiR¹R²R³

   mit R, R¹, R², R³ = Alkyl und/oder Aryl,
   a, b unabhängig voneinander = 1 bis 3,
   oder
c)

   X = [(CH₂)ₙSiR₃₋ₐ[(CH₂)ₙSiY_{b}R_{3-b}]ₐ]

   Y = OSiR¹R²R³

   mit R, R¹, R², R³ = Alkyl und/oder Aryl,
   a, b unabhängig voneinander = 1 bis 3,
   oder
d)

   X = [(CH₂)ₙSiR₃₋ₐ[(CH₂)ₙSiR₃₋ₐ[(CH₂)ₙSiY_{b}R_{3-b}]ₐ]ₐ]

   Y = OSiR¹R²R³

   mit R, R¹, R², R³ = Alkyl und/oder Aryl und
   a, b unabhängig voneinander = 1 bis 3,
wonach ein Dendrimer der Formel (II)

R₄₋ᵢSi[(CH₂)ₙSiZ_{c}R_{3-c}]ᵢ (II)

mit i = 3, 4, bevorzugt i = 4, n = 2-6, bevorzugt n = 2 und R = Alkyl und/oder Aryl, wobei n innerhalb des Moleküls gleich oder ungleich sein kann und wobei die weiteren Reste die folgende Bedeutung haben:
a) Z = Cl, Br, I, OR
   mit c = 1 bis 3, oder
b)

   Z = [(CH₂)ₙSiW_{d}R_{3-d}]

   mit c und d unabhängig voneinander = 1 bis 3, bevorzugt c = 3 und
   W im folgenden die Bedeutung von Cl, Br, I oder OR hat
   oder
c)

   Z = [(CH₂)ₙSiR_{3-c}[(CH₂)ₙSiW_{d}R_{3-d}]_{c}]

   mit c und d unabhängig voneinander = 1 bis 3, bevorzugt c = 3,
   oder
d)

   Z = [(CH₂)ₙSiR_{3-c}[(CH₂)ₙSiR_{3-c}[(CH₂)ₙSiW_{d}R_{3-d}]_{c}]_{c}]

   mit c und d unabhängig voneinander = 1 bis 3, bevorzugt c = 3,
   mit einem Triorganosilanolat, das vorzugsweise im Überschuß eingesetzt wird, in einem unpolaren Lösungsmittel zur Reaktion gebracht wird.

Ausformuliert entsprechen die Verbindungen II a-d den Formeln

R₄₋ᵢSi[(CH₂)ₙSiZ_{c}R_{3-c}]ᵢ (IIa)

oder

R₄₋ᵢSi[(CH₂)ₙSiR_{3-c}[(CH₂)ₙSiW_{d}R_{3-d}]_{c}]ᵢ oder (IIb)

R₄₋ᵢSi[(CH₂)ₙSiR_{3-c}[(CH₂)ₙSiR_{3-c}[(CH₂)ₙSiW_{d}R_{3-d}]_{c}]_{c}]ᵢ (IIc)

oder

R₄₋ᵢSi[(CH₂)ₙSiR_{3-c}[(CH₂)ₙSiR_{3-c}[(CH₂)ₙSiR_{3-c}[(CH₂)ₙSiW_{d}R_{3-d}]_{c}]_{c}]_{c}]ᵢ (IId).

Die Verbindungen der Formel (IIa) werden nach gängigen Methoden durch die Umsetzung eines geeigneten ungesättigten Silans mit einem Hydridosilan, wie z.B. eines Alkoxy- oder Halogenosilans in Gegenwart eines Katalysators, z.B. Hexachloroplatinsäure in Isopropanol, in einem unpolaren Lösungsmittel hergestellt. Die auf diese Weise erhaltenen Silane der Formel (IIa) werden in einem weiteren Schritt in einer Grignard-Reaktion mit einem Alkenylmagnesiumhalogenid in aliphatischem Ether zu Verbindungen mit Alkenylsilanfunktionalität umgesetzt. Zur Herstellung der Verbindungen der Formel (IIb), (IIc) und (IId) werden die obengenannten Schritte wiederholt.

Allgemeine Herstellvorschriften der Verbindungen IIa bis IId sind zudem in U.S. 5,276,110, Adv. Mater. 1993, 5, 466-468, Macromolecules 1993, 26, 963-968, J. Chem. Soc., Chem. Commun. 1994, 2575-2576 und Organometallics 1994, 13, 2682-2690 beschrieben.

Triorganosilanolate im Sinne der Erfindung sind vorzugsweise Verbindungen der Formel MOSiR¹R²R³, wobei M = Li, Na, K und R¹, R², R³ = lineare oder verzweigte, gegebenenfalls substituierte C₁-C₁₀-Alkyl- und/oder gegebenenfalls substituierte C₆-Aryl-Reste bedeuten. In einer bevorzugten Ausführungsform der vorliegenden Erfindung sind die Reste R¹ bis R³ einheitlich Methyl- oder Ethylgruppen. Besonders bevorzugt sind Natriumsilanolate sowie der Einsatz von Carbosilan-Dendrimeren mit den Endgruppen SiCl_{c}R_{3-c}.

Bevorzugte unpolare Lösungsmittel sind aliphatische Ether, besonders bevorzugt Diethylether.

Bevorzugt wird das erfindungsgemäße Verfahren bei Temperaturen ≥ Raumtemperatur, bevorzugt bei 25 bis 50°C, ganz besonders bevorzugt bei 30°C durchgeführt. Die Edukte können in einer beliebigen Reihenfolge gemischt werden. Bevorzugt ist jedoch die Vorlage des gegebenenfalls im Überschuß vorhandenen Triorganosilanolats und die anschließende Zugabe des Carbosilan-Dendrimers.

In einer bevorzugten Ausführungsform des erfindungsgemäßen Verfahrens wird eine Verbindung der Formeln (IIa bis d) in einem unpolaren Lösungsmittel gelöst und zu einer Mischung aus einem Triorganosilanolat in einem unpolaren Lösungsmittel getropft, wobei die Gesamtmischung noch mindestens 20 Stunden nachgerührt wird.

Vorzugsweise findet das erfindungsgemäße Verfahren unter Rühren statt.

Gegenstand der vorliegenden Erfindung ist zudem die Verwendung der erfindungsgemäßen Carbosilan-Dendrimere als Eichsubstanz in analytischen Methoden ebenso wie als Füllstoff in Kunststoffen, wie beispielsweise Siliconen und organischen Polymeren, wie Polycarbonat, Polyamid, Polystyrol etc..

Die Erfindung wird durch die nachfolgenden Beispiele näher erläutert. Die Erfindung ist jedoch nicht auf diese Beispiele beschränkt.

### Ausführungsbeispiele:

### Vorbemerkungen:

Alle Reaktionen wurden mittels Schlenk-Technik unter Argon oder im Vakuum durchgeführt. Alle verwendeten Lösungsmittel wurden nach den üblichen Labormethoden vor Gebrauch getrocknet und unter Argon destilliert eingesetzt. Käufliche Edukte wurden keiner weiteren Reinigung unterzogen.

¹H-NMR-Spektren wurden bei 400 bzw. 500 MHz, protonenentkoppelte ¹³C-Spektren bei 100 MHz mit einem AMX 500 der Firma Bruker aufgenommen. Das Spektrometer Varian XR300 der Firma Varian wurde bei 60 MHz für die Aufnahme protonenentkoppelter ²⁹Si-Spektren benutzt. Die Massensprektren wurden bei Maldi-Messungen mit einem Kratos Maldi3 der Firma Shimatzu angefertigt.

Als Hydrosilylierungskatalysator wurde eine 0,1 %ige Lösung von Hexachloroplatinsäure in absolutem Isopropanol eingesetzt.

Die Verbindungen Si[(CH₂)₂SiCl₃]₄ und Si[(CH₂)₂Si[(CH₂)₂SiCl₃]₃]₄ sind nach dem in Organometallics 1994, 13, 2682 beschriebenen Verfahren herstellbar.

Die Verbindungen Si[(CH₂)₂Si[(CH₂)₂Si(CH₃)₂Cl]₃]₄ und Si[(CH₂)₂SiCl₂Me]₄ sind analog zu dem in Organometallics 1994, 13, 2682 beschriebenen Verfahren unter Verwendung von HSiCl(CH₃)₂ bzw. HSiCl₂CH₃ als Silankomponente herstellbar.

### Beispiel 1 Synthese von Si[(CH₂)₂Si(OSiMe₃)₃]₄

10,8 g (15,9 mmol) Si[(CH₂)₂SiCl₃]₄ wurden in 10 ml Diethylether gelöst und zu 25 g (222,8 mol) Natriumtrimethylsilanolat in 60 ml Diethylether getropft. Die Reaktion war deutlich exotherm; das Zutropfen erfolgte so rasch, daß der Diethylether stetig siedete. Danach ließ man auf Raumtemperatur abkühlen, setzte weitere 40 ml Diethylether zu und rührte noch weitere 20 h. Danach verdünnte man mit 200 ml Hexan, wusch die organische Phase dreimal mit je 200 ml Wasser, trocknete über MgSO₄ und entfernte die flüchtigen Bestandteile im Vakuum. Man erhielt einen gelblichen Feststoff der aus siedendem Aceton/Methanol umkistallisiert wurde. Das Feinprodukt fiel als farblose Kristallnadeln an.

Das Produkt war gut löslich in unpolaren Lösungsmitteln, wie z.B. Pentan, Hexan oder Methylenchlorid.

Schmp.: 68-70°C.

### Elementaranalyse:

| | C | H | O | Si |
|---|---|---|---|---|
| Ber.: | 39,95 % | 9,45 % | 14,51 % | 36,09 % |
| Gef.: | 39,9 % | 9,5 % | 15,0 % | 35,6 % (Diff.) |

C₄₄H₁₂₄O₁₂Si₁₇
M=1322,917 g/mol

NMR: (CDCl₃)

¹H: δ = 0,06 ppm (s, 27 H, OSi(CH₃)₃); 0,28 ppm (m, 2H, SiCH₂); 0,46 ppm (m, 2H, SiCH₂).

¹³C{¹H}: δ = 1,37 ppm (s, OSi(CH₃)₃); 2,21 ppm (s, Si(CH₂)₄)ᵢ, 6,08 ppm (s, OSiCH₂).

²⁹Si{¹H}: δ -65,22 ppm (s, CH₂SiO); 6,87 ppm (s, OSiMe₃); 8,88 ppm (s, Si(CH₂)₄).

### Massenspektrum:

| | |
|---|---|
| Ber.: 1345,9 (M+Na) | 1329,9 (M+Li) |
| Gef.: 1345,8 | 1330,5 |

### Beispiel 2 Synthese von Si[(CH₂)₂Si[(CH₂)₂Si(OSiMe₃)₃]₃]₄

Zu 25 g (222,8 mmol) Natriumtrimethylsilanolat in 130 ml Diethylether wurden unter Rühren 12,6 g (5,71 mmol) Si[(CH₂)₂Si[(CH₂)₂SiCl₃]₃]₄ in 40 ml Diethylether zugetropft. Die Reaktionsmischung erwärmte sich dabei bis zum Sieden und das gebildete NaCl fiel aus. Nach vollständiger Zugabe ließ man auf Raumtemperatur abkühlen und rührte 20 h. Nun gab man 200 ml Hexan zu, wusch die organische Phase viermal mit je 200 ml Wasser, trocknete über MgSO₄ und entfernte die flüchtigen Bestandteile im Vakuum. Der ölige Rückstand wurde in siedendem Aceton aufgenommen und lieferte beim Abkühlen das Produkt als farblose, verwachsene Nadeln.

Das Produkt war gut löslich in unpolaren Lösungsmitteln, wie z.B. Pentan, Hexan oder Methylenchlorid.

### Elementaranalyse:

| | C | H |
|---|---|---|
| Ber.: | 40,64 % | 9,45 % |
| Gef.: | 39,7 % | 8,9 % |

C₁₄₀H₃₈₈O₃₆Si₅₃
M = 4137,137 g/mol

NMR: (CDCl₃)

¹H: δ = 0,10 ppm (s, 81 H, OSi(CH₃)₃); 0,38 ppm (m, 8 H, SiCH₂); 0,53 ppm (m, 8 H, SiCH₂).

¹³C{¹H}: δ = 2,11 ppm (s, OSi(CH₃)₃); 2,08 ppm, 2,69 ppm, 4,30 ppm und 6,80 ppm (s, SiCH₂).

²⁹Si{¹H}: δ = -64,96 ppm (s, CH₂SiO); 6,70 ppm (s, OSiMe₃); 7,90 ppm (s, Si(CH₂)₄), weitere Si-CH₂-Signale nicht aufgelöst.

### Beispiel 3: Synthese von Si[(CH₂)₂Si[(CH₂)₂Si(CH₃)₂OSiMe₃]₃]₄

Zu einer Lösung von 2,96 g (26,4 mmol) Natriumtrimethylsilanolat in 20 ml Diethylether tropfte man 3,22 g (1,9 mmol) Si[(CH₂)₂Si[(CH₂)₂Si(CH₃)₂Cl]₃]₄ in 5 ml Diethylether. Das Zutropfen erfolgte dabei so schnell, daß das Lösungsmittel schwach siedete. Nach vollständiger Zugabe rührte man weitere 20h bei Raumtemperatur und verdünnte dann mit 100 ml Hexan. Die organische Phase wurde nun dreimal mit je 60 ml Wasser gewaschen und anschließend über MgSO₄ getrocknet. Nach dem Entfernen der flüchtigen Bestandteile im Vakuum erhielt man das Rohprodukt als gelbes Öl. Dieses wurde in 60 ml Hexan aufgenommen und über Kieselgel filtriert. Das Kieselgel wurde zweimal mit 20 ml Hexan nachgewaschen und die vereinigten organischen Phasen im Vakuum vom Lösungsmittel befreit. Das fahlgelbe Öl wurde 20h im Vakuum am Rotationsverdampfer belassen und so von leichtflüchtigen Bestandteilen befreit.

### Elementaranalyse:

| | C | H | O |
|---|---|---|---|
| Ber.: | 46,87 % | 10,43 % | 8,15 % |
| Gef.: | 48,1 % | 10,8% | 8,0% |

C₉₂H₂₄₄O₁₂Si₂₉
M=2357,419 g/mol

NMR: (CDCl₃):

¹H: δ=0,02 ppm (s, 18 H, Si(CH₃)₂); 0,04 ppm (s, 27 H, OSi(CH₃)₃); 0,34 ppm (m, 16 H, SiCH₂).

¹³C{¹H}: δ= - 0,27 ppm (s, CH₂Si(CH₃)₂O); 2,06 ppm (s, OSi(CH₃)₃); 10,37 ppm (s, CH₂Si(CH₃)₂O); weitere SiCH₂-Signale waren überdeckt oder für eine Zuordnung zu stark verbreitert.

²⁹Si{¹H}: δ=6,25 ppm (s, OSiMe₃); 7,82 ppm und 7,87 (s, Si(CH₂)₄); 9,55 (s, CH₂Si(CH₃)₂O).

Das Produkt war gut mischbar mit unpolaren Lösungsmitteln, wie z.B. Pentan, Hexan oder Methylenchlorid.

### Beispiel 4: Herstellung von Si[(CH₂)₂SiMe(OSiMe₃)₂]₄

Zu 41,2 g (366,7 mmol) Natriumtrimethylsilanolat in 150 ml Diethylether tropfte man unter Rühren eine Lösung 21,9 g (36,6 mmol) Si[(CH₂)₂SiCl₂Me]₄ in 40 ml Diethylether. Das Zutropfen erfolgte so rasch, daß die Lösung gelinde unter Rückfluß siedete. Nach Ende der Zugabe rührte man noch 20h bei Raumtemperatur und verdünnte dann die Reaktionsmischung mit 200 ml Hexan. Nach Zugabe von 200 ml Wasser trennte man die organische Phase ab, wusch diese dreimal mit je 200 ml Wasser und trocknete schließlich über Magnesiumsulfat. Mit einem Rotationsverdampfer wurde nun der Ether und das Hexan im Vakuum abkondensiert; das so erhaltene fahlgelbe Öl wurde dann noch 2h bei 70°C im Vakuum belassen. Nach dem Abkühlen auf Raumtemperatur wurde das Öl in wenig Hexan aufgenommen und über Kieselgel filtriert. Dieses wurde einmal mit etwas Hexan nachgewaschen und die vereinigten organischen Phasen schließlich im Vakuum vom Lösungsmittel befreit. Das erhaltene ölige Feinprodukt neigte an der Gefäßwand zur Kristallisation.

Das Produkt war gut mischbar mit unpolaren Lösungsmitteln, wie z.B. Pentan, Hexan oder Methylenchlorid.

NMR: (CDCl₃)
¹H: δ= 0,02 ppm (s, 3H, SiCH₃(OSi(CH₃)₃)₂); 0,10 ppm (s, 18H, SiCH₃(OSi(CH₃)₃)₂); 0,31 ppm (m, 2H, SiCH₂); 0,46 ppm (m, 2H, SiCH₂).

¹³C{¹H}: δ = 1,19 ppm (s, SiCH₃(OSi(CH₃)₃)₂); 1,93 ppm (s, SiCH₃(OSi(CH₃)₃)₂); 2,23 ppm (s, Si(CH₂)₄); 9,69 ppm (s, CH₂SiO).

## Patentansprüche

1. Carbosilan-Dendrimere der allgemeinen Formel (I)
R₄₋ᵢSi[(CH₂)ₙSiXₐR₃₋ₐ]ᵢ (I)
mit i = 3,4 und n = 2-6, wobei n innerhalb des Moleküls gleich oder ungleich sein kann und wobei die weiteren Reste die folgende Bedeutung haben
a)
X = OSiR¹R²R³
mit R, R¹, R², R³ = Alkyl und/oder Aryl und
a = 1 bis 3,
ausgenommen sind die Verbindungen n = 2 mit R = CH₃ und a = 2,
oder
b)
X = [(CH₂)ₙSiY_{b}R_{3-b}]
Y = OSiR¹R²R³
mit R, R¹, R², R³ = Alkyl und/oder Aryl,
a, b unabhängig voneinander = 1 bis 3,
oder
c)
X = [(CH₂)ₙSiR₃₋ₐ[(CH₂)ₙSiY_{b}R_{3-b}]ₐ]
Y = OSiR¹R²R³
mit R, R¹, R², R³ = Alkyl und/oder Aryl,
a, b unabhängig voneinander = 1 bis 3,
oder
d)
X = [(CH₂)ₙSiR₃₋ₐ[(CH₂)ₙSiR₃₋ₐ[(CH₂)ₙSiY_{b}R_{3-b}]ₐ]ₐ]
Y = OSiR¹R²R³
mit R, R¹, R², R³ = Alkyl und/oder Aryl und
a, b unabhängig voneinander = 1 bis 3.

2. Carbosilan-Dendrimere nach Anspruch 1, **dadurch gekennzeichnet, daß** die Werte der Indizes n innerhalb des Moleküls gleich sind.

3. Carbosilan-Dendrimere nach einem der Ansprüche 1 bis 2, **dadurch gekennzeichnet, daß** diese Verbindungen der Formel Si[(CH₂)₂Si(OSiR¹R²R³)₃]₄ oder Si[(CH₂)₂Si[(CH₂)₂Si(OSiR¹R²R³)₃]₃]₄ sind.

4. Verfahren zur Herstellung von Carbosilan-Dendrimeren der Formel I
R₄₋ᵢSi[(CH₂)ₙSiXₐR₃₋ₐ]ᵢ (I)
mit i = 3,4 und n = 2-6, wobei n innerhalb des Moleküls gleich oder ungleich sein kann und wobei die weiteren Reste die folgende Bedeutung haben
a)
X = OSiR¹R²R³
mit R, R¹, R², R³ = Alkyl und/oder Aryl und
a = 1 bis 3
oder
b)
X = [(CH₂)ₙSiY_{b}R_{3-b}]
Y = OSiR¹R²R³
mit R, R¹, R², R³ = Alkyl und/oder Aryl,
a, b unabhängig voneinander = 1 bis 3,
oder
c)
X = [(CH₂)ₙSiR₃₋ₐ[(CH₂)ₙSiY_{b}R_{3-b}]ₐ]
Y = OSiR¹R²R³
mit R, R¹, R², R³ = Alkyl und/oder Aryl,
a, b unabhängig voneinander = 1 bis 3,
oder
d)
X = [(CH₂)ₙSiR₃₋ₐ[(CH₂)ₙSiR₃₋ₐ[(CH₂)ₙSiY_{b}R_{3-b}]ₐ]ₐ]
Y = OSiR¹R²R³
mit R, R¹, R², R³ = Alkyl und/oder Aryl und
a, b unabhängig voneinander = 1 bis 3,
**dadurch gekennzeichnet, daß** ein Dendrimer der Formel (II)
R₄₋ᵢSi[(CH₂)ₙSiZ_{c}R_{3-c}]ᵢ (II)
mit i = 3, 4, n = 2-6 und R = Alkyl und/oder Aryl, wobei n innerhalb des Moleküls gleich oder ungleich sein kann und wobei die weiteren Reste die folgende Bedeutung haben:
a)
Z = Cl, Br, I, OR
mit c = 1 bis 3, oder
b)
Z = [(CH₂)ₙSiW_{d}R_{3-d}]
mit c und d unabhängig voneinander = 1 bis 3, und
W im folgenden die Bedeutung von Cl, Br, I oder OR hat
oder
c)
Z = [(CH₂)ₙSiR_{3-c}[(CH₂)ₙSiW_{d}R_{3-d}]_{c}]
mit c und d unabhängig voneinander = 1 bis 3,
oder
d)
Z = [(CH₂)ₙSiR_{3-c}[(CH₂)ₙSiR_{3-c}[(CH₂)ₙSiW_{d}R_{3-d}]_{c}]_{c}]
mit c und d unabhängig voneinander = 1 bis 3,
mit einem Triorganosilanolat in einem unpolaren Lösungsmittel zur Reaktion gebracht wird.

5. Verfahren zur Herstellung von Carbosilan-Dendrimeren nach Anspruch 4, **dadurch gekennzeichnet, daß** Triorganosilanolate der Formel MOSiR¹R²R³ mit M = Li, Na, K und R¹, R², R³ = C₁-C₁₀-Alkyl und/oder C₆- Aryl eingesetzt werden.

6. Verfahren nach einem der Ansprüche 4 bis 5, **dadurch gekennzeichnet, daß** als Triorganosilanolate Natriumsilanolate, eingesetzt werden.

7. Verfahren nach einem der Ansprüche 4 bis 6, **dadurch gekennzeichnet, daß** als unpolare Lösungsmittel aliphatische Ether eingesetzt werden.

8. Verwendung der Carbosilan-Dendrimere nach einem der Ansprüche 1 bis 3 als Eichsubstanz.

9. Verwendung der Carbosilan-Dendrimere nach einem der Ansprüche 1 bis 3 als Füllstoff für Kunststoffe.

## Claims

1. Carbosilane dendrimers of general formula (I)
R₄₋ᵢSi[(CH₂)ₙSiXₐR₃₋ₐ]ᵢ (I)
where i = 3,4 and n = 2-6, where n may be the same or different within the molecule, and where the other radicals have the following meanings
a)
X = OSiR¹R²R³
where R, R¹, R², R³ = alkyl and/or aryl, and
a = 1 to 3
with the exception of compounds wherein n = 2, R = CH₃ and a = 2,
or
b)
X = [(CH₂)ₙSiY_{b}R_{3-b}]
Y = OSiR¹R²R³
where R, R¹, R², R³ = alkyl and/or aryl, and
a, b, independently of each other, = 1 to 3,
or
c)
X = [(CH₂)ₙSiR₃₋ₐ[(CH₂)ₙSiY_{b}R_{3-b}]ₐ]
Y = OSiR¹R²R³
where R, R¹, R², R³ = alkyl and/or aryl,
a, b, independently of each other, = 1 to 3,
or
d)
X = [(CH₂)ₙSiR₃₋ₐ[(CH₂)ₙSiR₃₋ₐ[(CH₂)ₙSiY_{b}R_{3-b}]ₐ]ₐ]
Y = OSiR¹R²R³
where R, R¹, R², R³ = alkyl and/or aryl and
a, b, independently of each other, = 1 to 3.

2. Carbosilane dendrimers according to claim 1, **characterised in that** the values of the suffix n are equal within the molecule.

3. Carbosilane dendrimers according to either one of claims 1 or 2, **characterised in that** they are compounds of formula Si[(CH₂)₂Si(OSiR¹R²R³)₃]₄ or Si[(CH₂)₂Si[(CH₂)₂Si(OSiR¹R²R³)₃]₃]₄.

4. A method of preparing carbosilane dendrimers of formula (I)
R₄₋ᵢSi[(CH₂)ₙSiXₐR₃₋ₐ]ᵢ (I)
where i = 3,4 and n = 2-6, where n may be the same or different within the molecule, and where the other radicals have the following meanings
a)
X = OSiR¹R²R³
where R, R¹, R², R³ = alkyl and/or aryl, and
a = 1 to 3
or
b)
X = [(CH₂)ₙSiY_{b}R_{3-b}]
Y = OSiR¹R²R³
where R, R¹, R², R³ = alkyl and/or aryl, and
a, b, independently of each other, = 1 to 3,
or
c)
X = [(CH₂)ₙSiR₃₋ₐ[(CH₂)ₙSiY_{b}R_{3-b}]ₐ]
Y = OSiR¹R²R³
where R, R¹, R², R³ = alkyl and/or aryl,
a, b, independently of each other, = 1 to 3,
or
d)
X = [(CH₂)ₙSiR₃₋ₐ[(CH₂)ₙSiR₃₋ₐ[(CH₂)ₙSiY_{b}R_{3-b}]ₐ]ₐ]
Y = OSiR¹R²R³
where R, R¹, R², R³ = alkyl and/or aryl and
a, b, independently of each other, = 1 to 3,
**characterised in that** a dendrimer of formula (II)
R₄₋ᵢSi[(CH₂)ₙSiZ_{c}R_{3-c}]ᵢ (II)
where i = 3, 4, n = 2-6 and R = alkyl and/or aryl, where n may be the same or different within the molecule, and where the other radicals have the following meanings:
a)
Z = Cl, Br, I, OR
where c = 1 to 3, or
b)
Z = [(CH₂)ₙSiW_{d}R_{3-d}]
where c and d, independently of each other, = 1 to 3, and
W hereinafter denotes Cl, Br, I or OR,
or
c)
Z = [(CH₂)ₙSiR_{3-c}[(CH₂)ₙSiW_{d}R_{3-d}]_{c}]
where c and d, independently of each other, = 1 to 3, or
d)
Z = [(CH₂)ₙSiR_{3-c}[(CH₂)ₙSiR_{3-c}[(CH₂)ₙSiW_{d}R_{3-d}]_{c}]_{c}]
where c and d, independently of each other, = 1 to 3,
is reacted with a triorganosilanolate in a nonpolar solvent.

5. A method of preparing carbosilane dendrimers according to claim 4, **characterised in that** triorganosilanolates of formula MOSiR¹R²R³ are used, where M = Li, Na, K and R¹, R², R³ = a C₁-C₁₀ alkyl and/or a C₆ aryl.

6. A method according to either one of claims 4 or 5, **characterised in that** sodium silanolates are used as triorganosilanolates.

7. A method according to any one of claims 4 to 6, **characterised in that** aliphatic ethers are used as nonpolar solvents.

8. Use of the carbosilane dendrimers according to any one of claims I to 3 as a calibration substance.

9. Use of the carbosilane dendrimers according to any one of claims 1 to 3 as a filler for plastics.

## Revendications

1. Carbosilanes dendrimères de formule générale (I)
R₄₋ᵢSi[(CH₂)ₙSiXₐR₃₋ₐ]ᵢ (I)
dans laquelle i = 3, 4 et n = 2 à 6, n pouvant prendre des valeurs identiques ou différentes à l'intérieur de la molécule, les autres symboles ayant les significations suivantes:
a)
X = OSiR¹R²R³
avec R, R¹, R², R³ = alkyle et/ou aryle et
a = 1 à 3,
à l'exception des composés pour lesquels n = 2 avec R = CH₃ et a = 2,
ou bien
b)
X = [(CH₂)ₙSiY_{b}R_{3-b}]
Y = OSiR¹R²R³
avec R, R¹, R², R³ = alkyle et/ou aryle,
a, b, indépendamment l'un de l'autre = 1 à 3,
ou bien
c)
X = [(CH₂)ₙSiR₃₋ₐ[(CH₂)ₙSiY_{b}R_{3-b}]ₐ
Y = OSiR¹R²R³
avec R, R¹, R², R³ = alkyle et/ou aryle,
a, b, indépendamment l'un de l'autre = 1 à 3
ou bien
d)
X = [(CH₂)ₙSiR₃₋ₐ[(CH₂)ₙSiR₃₋ₐ[(CH₂)ₙSiY_{b}R_{3-b}]ₐ]ₐ]
Y = OSiR¹R²R³
avec R, R¹, R², R³ = alkyle et/ou aryle et
a, b, indépendamment l'un de l'autre = 1 à 3.

2. Carbosilanes dendrimères selon la revendication 1, **caractérisés en ce que** les valeurs de l'indice n sont identiques à l'intérieur de la molécule.

3. Carbosilanes dendrimères selon l'une des revendications 1 à 2, **caractérisés en ce qu'**il s'agit de composés de formule Si[(CH₂)₂Si(OSiR¹R²R³)₃]₄ ou Si[(CH₂)₂Si[(CH₂)₂Si(OSiR¹R²R³)₃]₃]₄.

4. Procédé pour la préparation des carbosilanes dendrimères de formule I
R₄₋ᵢSi[(CH₂)ₙSiXₐR₃₋ₐ]ᵢ (I)
dans laquelle i = 3, 4 et n = 2 à 6, n pouvant prendre des valeurs identiques ou différentes à l'intérieur de la molécule, les autres symboles ayant les significations suivantes :
a)
X = OSiR¹R²R³
avec R, R¹, R², R³ = alkyle et/ou aryle et
a = 1 à 3
ou bien
b)
X = [(CH₂)ₙSiY_{b}R_{3-b}]
Y = OSiR¹R²R³
avec R, R¹, R², R³ = alkyle et/ou aryle,
a, b, indépendamment l'un de l'autre = 1 à 3,
ou bien
c)
X = [(CH₂)ₙSiR₃₋ₐ[(CH₂)ₙSiY_{b}R_{3-b}]ₐ]
Y = OSiR¹R²R³
avec R, R¹, R², R³ = aikyle et/ou aryle et
a, b, indépendamment l'un de l'autre = 1 à 3,
ou bien
d)
X = [(CH₂)ₙSiR₃₋ₐ[(CH₂)ₙSiR₃₋ₐ[(CH₂)ₙSiY_{b}R_{3-b}]ₐ]ₐ]
Y = OSiR¹R²R³
avec R, R¹, R², R³ = alkyle et/ou aryle et
a, b, indépendamment l'un de l'autre = 1 à 3,
**caractérisé en ce que** l'on fait réagir un dendrimère de formule (II)
R₄₋ᵢSi[(CH₂)ₙSiZ_{c}R_{3-c}]ᵢ (II)
dans laquelle i = 3, 4, n = 2 à 6 et R = alkyle et/ou aryle, n pouvant prendre des valeurs identiques ou différentes à l'intérieur de la molécule, les autres symboles ayant les significations suivantes :
a)
Z = Cl, Br, I, OR
avec c = 1 à 3, ou bien
b)
Z = [(CH₂)ₙSiW_{d}R_{3-d}]
avec c et d, indépendamment l'un de l'autre = 1 à 3 et
W, dans tout ce qui suit, représente Cl, Br, I ou OR
ou bien
c)
Z = [(CH₂)ₙSiR_{3-c}[(CH₂)ₙSiW_{d}R_{3-d}]_{c}]
avec c et d, indépendamment l'un de l'autre = 1 à 3, ou bien
d)
Z = [(CH₂)ₙSiR_{3-c}[(CH₂)ₙSiR_{3-c}[(CH₂)ₙSiW_{d}R_{3-d}]_{c}]_{c}]
avec c et d, indépendamment l'un de l'autre = 1 à 3,
avec un triorganosilanolate dans un solvant non polaire.

5. Procédé pour la préparation de carbosilanes dendrimères selon la revendication 4, **caractérisé en ce que** l'on utilise des triorganosilanolates de formule MOSiR¹R²R³ dans laquelle M = Li, Na, K et R¹, R², R³ = alkyle en C₁-C₁₀ et/ou aryle en C₆.

6. Procédé selon l'une des revendications 4 à 5, **caractérisé en ce que** l'on utilise en tant que triorganosilanolates de silanolates de sodium.

7. Procédé selon l'une des revendications 4 à 6, **caractérisé en ce que** l'on utilise en tant que solvants non polaires des éthers aliphatiques.

8. Utilisation des carbosilanes dendrimères selon l'une des revendications 1 à 3 en tant que substances étalons.

9. Utilisation des carbosilanes dendrimères selon l'une des revendications 1 à 3 en tant que matières de charge pour des résines synthétiques.
